# EUROPÄISCHE PATENTSCHRIFT

(11) **EP 2 931 482 B1**
(45) Veröffentlichungstag und Bekanntmachung des Hinweises auf die Patenterteilung: **17.10.2018**
(21) Anmeldenummer: 13805836.7
(22) Anmeldetag: 10.12.2013
(51) Int. Cl.: B25F 5/00, B25C 1/08

(54) **VERFAHREN ZUM BETREIBEN EINES HANDGEFÜHRTEN ARBEITSGERÄTS**
METHOD FOR OPERATING A HAND-HELD WORKING DEVICE
PROCÉDÉ POUR FAIRE FONCTIONNER UN OUTIL DE TRAVAIL TENU À LA MAIN

(30) Priorität: 13.12.2012 DE 102012223011
(43) Veröffentlichungstag der Anmeldung: 21.10.2015
(73) Patentinhaber: Hilti Aktiengesellschaft, 9494 Schaan (LI)
(72) Erfinder: GEROLD, Uwe, 88131 Lindau (DE); WELTE, Norbert, A-6833 Klaus (AT); SAUER, Thorsten, A-6820 Frastanz. (AT)
(74) Vertreter: Hilti Aktiengesellschaft Corporate Intellectual Property
(86) Internationale Anmeldenummer: PCT/EP2013/076055
(87) Internationale Veröffentlichungsnummer: WO 2014/090788

(56) Entgegenhaltungen:
- EP-A1- 1 277 548
- WO-A2-2005/098886
- DE-A1- 10 303 006
- DE-A1-102008 000 973
- JP-B2- 5 083 073

## Beschreibung

### Technisches Gebiet

Die Erfindung betrifft ein Verfahren zum Betreiben eines handgeführten Arbeitsgeräts, das eine Datenerfassungseinheit umfasst, in der Auslöseschalterbetätigungen und Beschleunigungen des Arbeitsgeräts erfasst werden.

### Stand der Technik

Aus der deutschen Offenlegungsschrift DE 103 03 006 A1 ist ein handgeführtes Arbeitsgerät mit einem darin angeordneten Setz- oder Schlagimpulse erzeugenden Arbeitswerk und mit wenigstens einer Sensoreinrichtung bekannt, die zur Erfassung von während eines Setz- oder Schlagimpulses auftretenden Beschleunigungskräften dient, sowie mit einem Diskriminatormittel, das zum Beispiel an einen elektronischen Auslöseschalter angekoppelt sein könnte, so dass ein tatsächlicher Zündvorgang auf diese Weise vom Diskriminatormittel wahrgenommen werden kann. Aus der deutschen Offenlegungsschrift DE 10 2008 000 973 A1 sowie aus der JP 5 083 073 B2 sind weitere handgeführte Arbeitsgeräte bekannt, welche Sensormittel, wie einen Beschleunigungssensor, und jeweils eine Steuerung umfassen, die mit einem Auslöseschalter des jeweiligen Arbeitsgeräts verbunden ist.

### Darstellung der Erfindung

Aufgabe der Erfindung ist es, das Betreiben eines handgeführten Arbeitsgeräts, das eine Datenerfassungseinheit umfasst, in der Auslöseschalterbetätigungen und Beschleunigungen des Arbeitsgeräts erfasst werden, weiter zu vereinfachen und/oder zu verbessern.

Die Aufgabe ist bei einem Verfahren zum Betreiben eines handgeführten Arbeitsgeräts, das eine Datenerfassungseinheit umfasst, in der Auslöseschalterbetätigungen und Beschleunigungen des Arbeitsgeräts erfasst werden, dadurch gelöst, dass innerhalb einer begrenzten Zeitdauer nach einer Auslöseschalterbetätigung überwacht wird, ob eine Beschleunigung des Arbeitsgeräts eine Beschleunigungsschwelle überschreitet, wobei von einer störungsfreien Zündung/Setzung ausgegangen wird, wenn die Beschleunigung des Arbeitsgeräts die Beschleunigungsschwelle überschreitet, und/oder von einer Zündstörung/Setzstörung ausgegangen wird, wenn die Beschleunigung des Arbeitsgeräts die Beschleunigungsschwelle nicht überschreitet. Die entsprechenden Werte für die Beschleunigungsschwelle sind vorzugsweise in dem Arbeitsgerät, zum Beispiel in einer geeigneten Steuerungseinheit, abgelegt beziehungsweise gespeichert. Gegebenenfalls können aus einem tatsächlich erfassten Beschleunigungswert in der Relation zu der Beschleunigungsschwelle vorteilhaft Rückschlüsse auf eine Ursache für die Zündstörung/Setzstörung gezogen werden.

Bei dem Arbeitsgerät handelt es sich vorzugsweise um ein handgeführtes Arbeitsgerät zum Setzen von Bolzen, das mit Brenngas oder Treibladungspulver betrieben wird. Daher kann das Arbeitsgerät auch als gas- beziehungsweise pulverbetriebenes Bolzensetzgerät oder Bolzenschubwerkzeug bezeichnet werden. Das Brenngas wird einem geräteinternen Brennraum zugeführt, in welchem ein brennfähiges Gemisch gezündet wird, um ein Befestigungselement, wie einen Bolzen oder einen Nagel, vorzugsweise mittelbar über einen Setzkolben, in einen Untergrund einzutreiben. Durch Zündstörungen kann der Betrieb des Arbeitsgeräts in unerwünschter Weise beeinträchtigt werden. Alternativ wird das Arbeitsgerät gemäss einer Ausgestaltung mit elektrischer Energie insbesondere eines innerhalb des Arbeitsgeräts angeordneten Akkus betrieben. Dabei wird vorzugsweise mit Hilfe eines akkubetriebenen Elektromotors ein Energiespeicher, beispielsweise eine Feder oder ein Schwungrad, aufgeladen, der bei einer Auslöseschalterbetätigung die in ihm gespeicherte Energie schlagartig an ein Befestigungselement abgibt, vorzugsweise mittelbar über einen Setzkolben. Ist eine solche Setzung gestört, kann ebenfalls der Betrieb des Arbeitsgeräts beeinträchtigt sein.

Durch das erfindungsgemäße Verfahren kann eine Zündstörungsrate bzw. Setzstörungsrate des Arbeitsgeräts im Betrieb auf einfache Art und Weise erfasst, ermittelt, überwacht beziehungsweise festgehalten werden. Dadurch wird eine besonders effiziente Überwachung der Geräteperformance und des Anwenderverhaltens ermöglicht. Durch eine Online-Überwachung der Zündstörungsrate/Setzstörungsrate können die Zündstörungen/Setzstörungen gegebenenfalls auch geräteintern beseitigt werden, indem geräteintern entsprechende Maßnahmen durchgeführt werden.

Ein bevorzugtes Ausführungsbeispiel des Verfahrens ist dadurch gekennzeichnet, dass der Verlauf der Beschleunigung innerhalb der begrenzten Zeitdauer erfasst wird. Aus dem Verlauf der Beschleunigung innerhalb der begrenzten Zeitdauer können vorteilhaft weitergehende Rückschlüsse auf die Ursache für die Zündstörung/Setzstörung gezogen werden.

Ein weiteres bevorzugtes Ausführungsbeispiel des Verfahrens ist dadurch gekennzeichnet, dass von einer störungsfreien Zündung/Setzung ausgegangen wird, wenn die Beschleunigung innerhalb der begrenzten Zeitdauer einen für einen störungsfreien Betrieb charakteristischen Verlauf aufweist. Der charakteristische Verlauf kann, zum Beispiel durch Versuche und Untersuchungen im Rahmen der Entwicklung des Arbeitsgeräts, ermittelt und in einem internen Speicher des Arbeitsgeräts abgelegt werden.

Ein weiteres bevorzugtes Ausführungsbeispiel des Verfahrens ist dadurch gekennzeichnet, dass von einer Zündstörung/Setzstörung ausgegangen wird, wenn die Beschleunigung innerhalb der begrenzten Zeitdauer keinen für einen störungsfreien Betrieb charakteristischen Verlauf aufweist. Je nach Abweichung können geräteintern vorteilhaft unterschiedliche Maßnahmen durchgeführt werden.

Ein weiteres bevorzugtes Ausführungsbeispiel des Verfahrens ist dadurch gekennzeichnet, dass die Anzahl der störungsfreien Zündungen/Setzungen und/oder die Anzahl der Zündstörungen/Setzstörungen gespeichert werden. Diese Informationen können zum Beispiel dazu verwendet werden, um die Durchführung von Wartungsarbeiten an dem Arbeitsgerät zu optimieren.

Ein weiteres bevorzugtes Ausführungsbeispiel des Verfahrens ist dadurch gekennzeichnet, dass die Anzahl der störungsfreien Zündungen/Setzungen und/oder die Anzahl der Zündstörungen/Setzstörungen an dem Arbeitsgerät angezeigt werden. Dabei kann die jeweilige Anzahl explizit an dem Arbeitsgerät angezeigt werden. Es ist aber auch möglich, die jeweilige Anzahl oder eine der beiden Anzahlen optisch durch verschiedene Farbbalken oder Farbfelder, oder in Form von Diagrammen oder Grafiken, außen an dem Arbeitsgerät anzuzeigen. Diese Information kann zum Beispiel dazu benutzt werden, einem Benutzer des Arbeitsgeräts zu vermitteln, dass Wartungsarbeiten an dem Arbeitsgerät durchgeführt werden sollten.

Ein weiteres bevorzugtes Ausführungsbeispiel des Verfahrens ist dadurch gekennzeichnet, dass die Anzahl der störungsfreien Zündungen/Setzungen und/oder die Anzahl der Zündstörungen/Setzstörungen bedarfsabhängig oder zyklisch angezeigt und/oder ausgelesen werden. Die jeweilige Anzahl kann zum Beispiel beim Anschalten des Arbeitsgeräts angezeigt werden. Besonders vorteilhaft kann die jeweilige Anzahl bei einer Inspektion des Arbeitsgeräts oder vor Wartungsarbeiten an dem Arbeitsgerät ausgelesen beziehungsweise angezeigt werden.

Ein weiteres bevorzugtes Ausführungsbeispiel des Verfahrens ist dadurch gekennzeichnet, dass die Anzahl der störungsfreien Zündungen/Setzungen und/oder die Anzahl der Zündstörungen/Setzstörungen per Datenfernübertragung ausgegeben werden. Zu diesem Zweck kann das Arbeitsgerät vorteilhaft mit einer Datenfernübertragungseinrichtung zur kabellosen, netzwerkgestützten, digitalen Datenfernübertragung ausgestattet sein, die vorzugsweise eine Funk-Sende- und Empfangseinheit und eine Funkantenne aufweist, die mit einer geräteinternen Steuerung in Verbindung steht, um einen ortsunabhängigen Datenaustausch mit einer zentralen Auswertestelle zu ermöglichen. Eine derartige Datenfernübertragungseinrichtung ist zum Beispiel in der vorab genannten deutschen Offenlegungsschrift DE 10 2008 000 973 A1 beschrieben.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

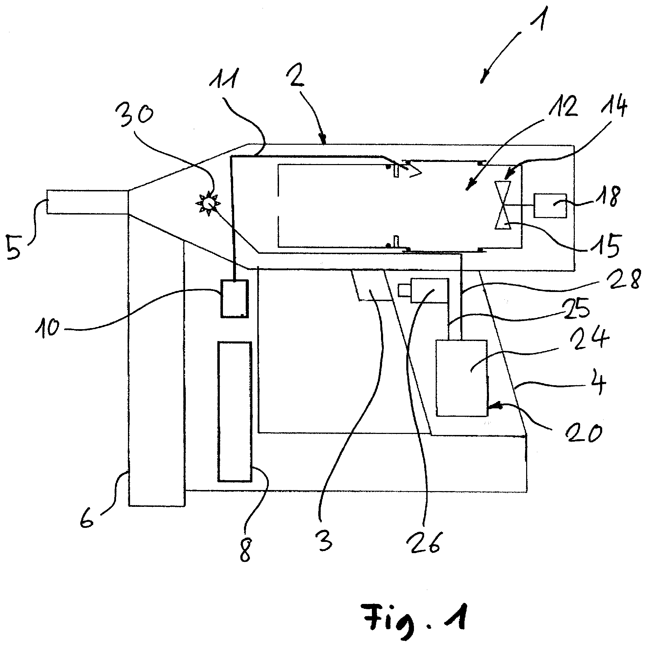

Figur 1 zeigt eine vereinfachte Darstellung eines erfindungsgemäßen Arbeitsgeräts im Schnitt.

### Ausführungsbeispiele

In Figur 1 ist ein erfindungsgemäßes Arbeitsgerät 1 mit einem Gehäuse 2 stark vereinfacht dargestellt. Das Arbeitsgerät 1 ist als handgeführtes Bolzensetzgerät mit einem Handgriff 4 ausgeführt, an dem das Bolzensetzgerät 1 zum Eintreiben eines Befestigungselements greifbar ist, das beim Betätigen eines Auslöseschalters 3 an einem Bolzenführungsende 5 aus dem Bolzensetzgerät 1 austritt und in einen Untergrund eintreibbar ist.

Die verwendeten Befestigungselemente werden vorzugsweise über ein geräteinternes Magazin 6 bereitgestellt, das in der Nähe des Bolzenführungsendes 5 des Bolzensetzgeräts 1 angebracht ist. Aus dem Magazin 6 werden die Befestigungselemente vorzugsweise einzeln automatisch entnommen und am Bolzenführungsende 5 bereitgestellt.

Die zum Eintreiben der Befestigungselemente in den Untergrund benötigte Energie wird in einem Brennstoffbehälter 8 im Inneren des Bolzensetzgeräts 1 bereitgestellt. Der Brennstoffbehälter 8 enthält vorzugsweise flüssiges Brenngas und wird daher auch als Gasbehälter oder Gaskartusche bezeichnet.

Der Brennstoffbehälter 8 ist über eine verstellbare beziehungsweise regelbare Dosiereinrichtung 10 und eine Gasleitung 11 mit einer Brennkammer oder einem Brennraum 12 verbindbar. Die Dosiereinrichtung 10 umfasst vorzugsweise ein Dosierventil, über das die dem Brennraum zugeführte Gasmenge, zum Beispiel volumetrisch oder zeitabhängig, gesteuert werden kann.

In dem Brennraum 12 wird Brennstoff, insbesondere Gas, aus dem Brennstoffbehälter 8 mit Luft zu einem brennfähigen Gemisch vermischt, das gezündet wird, um ein Befestigungselement, wie einen Bolzen oder einen Nagel, in den Untergrund einzutreiben. Die zum Eintreiben benötigte Energie wird, zum Beispiel über einen (nicht dargestellten) Arbeitskolben von der Brennkammer 12 auf ein Befestigungselement am Bolzenführungsende 5 übertragen.

In dem Brennraum 12 ist eine Einrichtung 14 angeordnet, die dazu dient, in dem Brennraum 12 Turbulenz zu erzeugen, den Brennraum 12 zu spülen und/oder zu kühlen. Die Einrichtung 14 umfasst einen Ventilator 15, der von einem Elektromotor 18 angetrieben wird. Der Elektromotor 18 wird über eine elektronische Steuerungseinrichtung 20 angesteuert.

Die Steuereinrichtung 20 umfasst eine Datenerfassungseinheit 24, in der Daten, wie im Betrieb des Arbeitsgeräts 1 erfasste Betriebsdaten oder Messwerte, erfasst, gespeichert und verarbeitet werden können. Über eine Leitung 25 ist eine Sensoreinrichtung 26 an die Steuerungseinrichtung 20 angeschlossen.

Die Sensoreinrichtung 26 umfasst zum Beispiel einen Taster, durch den eine Betätigung des Auslöseschalters 3 erfasst oder detektiert wird. Wenn der Auslöseschalter 3 betätigt wird, dann wird diese Information über die vorzugsweise als Signalleitung ausgeführte Leitung 25 an die Datenerfassungseinheit 24 in der Steuerungseinrichtung 20 weitergegeben.

Über eine weitere Leitung 28, die vorzugsweise ebenfalls als Signalleitung ausgeführt ist, ist ein Beschleunigungssensor 30 an die Steuerungseinrichtung 20 angeschlossen. Der Beschleunigungssensor 30 umfasst einen oder mehrere Sensoren, mit dem beziehungsweise denen Beschleunigungen im Betrieb des Arbeitsgeräts 1, insbesondere Beschleunigungen, wie sie beim Setzen eines Befestigungselements auftreten, erfasst werden können.

Der Beschleunigungssensor 30 erfasst insbesondere Beschleunigungen in Richtung einer Geräteachse entlang der ein Befestigungselement an dem Bolzenführungsende 5 aus dem Arbeitsgerät 1 austritt. Der Beschleunigungssensor 30 ist besonders vorteilhaft so ausgeführt, dass er auch den Verlauf der jeweiligen Beschleunigung erfasst. Zu diesem Zweck sind vorteilhaft mehrere Sensoren miteinander kombiniert.

Die von dem Beschleunigungssensor 30 erfassten Beschleunigungswerte beziehungsweise die Informationen über den Verlauf der Beschleunigung werden über die Leitung 28 an die Datenerfassungseinheit 24 in der Steuerungseinrichtung 20 weitergegeben. Zur Ermittlung einer Zündstörungsrate wird gemäß einem wesentlichen Aspekt der Erfindung ein Betätigungssignal, das beim Betätigen des Auslöseschalters 3 von der Sensoreinrichtung 26 erfasst wird, verwendet, um eine Wartezeit in Form einer begrenzten Zeitdauer von beispielsweise 150 Millisekunden auszulösen. Das Signal beim Betätigen des Auslöseschalters 3, der auch als Trigger bezeichnet wird, wird auch als Triggersignal bezeichnet.

In der Datenerfassungseinheit 24 wird innerhalb der Wartezeit abgewartet oder überwacht, ob ein mit dem Beschleunigungssensor 30 detektiertes Beschleunigungssignal auftritt. Vorteilhaft wird mit Hilfe der Datenerfassungseinheit 24 in der Steuerungseinrichtung 20 des Weiteren überwacht beziehungsweise überprüft, ob ein aufgetretenes Beschleunigungssignal eine einstellbare Beschleunigungsschwelle überschreitet.

Bevorzugt wird überwacht beziehungsweise überprüft, ob ein aufgetretenes Beschleunigungssignal einen definierten Verlauf aufweist, welcher besonders bevorzugt zwei oder mehr Beschleunigungsschwellen aufweist, welche jeweils zu unterschiedlichen Zeitpunkten beziehungsweise in bestimmten unterschiedlichen Zeitfenstern zu über- oder unterschreiten sind.

Wenn innerhalb des durch die Wartezeit vorgegebenen Zeitfensters ein derartiges Signal auftritt, dann kann von einer störungsfreien Zündung ausgegangen werden. Ein entsprechender Zähler in der Steuerungseinrichtung für störungsfreie Zündungen kann hochgezählt werden. Die Information über die störungsfreie Zündung kann auch anderweitig in einem internen Speicher abgelegt werden.

Wenn kein derartiges Signal auftritt, also wenn das erfasste Beschleunigungssignal keinen definierten Verlauf aufweist und/oder die Beschleunigungsschwelle nicht überschreitet, dann kann das als Zündstörung aufgefasst werden. Ein entsprechender Zähler für Zündstörungen kann dann hochgezählt werden. Die Zündstörung kann auch anderweitig im internen Speicher erfasst beziehungsweise gespeichert werden.

Die Informationen über Zündstörungen beziehungsweise störungsfreie Zündungen können einem Benutzer oder Anwender des Arbeitsgeräts 1 direkt angezeigt werden, um ihn beispielsweise auf eine fällige Reparatur oder Wartung hinzuweisen, wenn zum Beispiel die Anzahl der Zündstörungen zunimmt. Die Informationen über Zündstörungen oder störungsfreie Zündungen können auch zyklisch in Reparaturzentren ausgelesen werden. Die Zündstörungsraten können auch per Datenfernübertragung gesammelt und zentral ausgewertet werden.

## Patentansprüche

1. Verfahren zum Betreiben eines handgeführten Arbeitsgeräts (1), das eine Datenerfassungseinheit (24) umfasst, in der Auslöseschalterbetätigungen und Beschleunigungen des Arbeitsgeräts (1) erfasst werden, **dadurch gekennzeichnet, dass** innerhalb einer begrenzten Zeitdauer nach einer Auslöseschalterbetätigung überwacht wird, ob eine Beschleunigung des Arbeitsgeräts (1) eine Beschleunigungsschwelle überschreitet, und dass von einer störungsfreien Zündung/Setzung ausgegangen wird, wenn die Beschleunigung des Arbeitsgeräts (1) die Beschleunigungsschwelle überschreitet, und/oder dass von einer Zündstörung/Setzstörung ausgegangen wird, wenn die Beschleunigung des Arbeitsgeräts (1) die Beschleunigungsschwelle nicht überschreitet.

2. Verfahren nach Anspruch 1, **dadurch gekennzeichnet, dass** der Verlauf der Beschleunigung innerhalb der begrenzten Zeitdauer erfasst wird.

3. Verfahren nach Anspruch 2, **dadurch gekennzeichnet, dass** von einer störungsfreien Zündung/Setzung ausgegangen wird, wenn die Beschleunigung innerhalb der begrenzten Zeitdauer einen für einen störungsfreien Betrieb charakteristischen Verlauf aufweist.

4. Verfahren nach Anspruch 2 oder 3, **dadurch gekennzeichnet, dass** von einer Zündstörung/Setzstörung ausgegangen wird, wenn die Beschleunigung innerhalb der begrenzten Zeitdauer keinen für einen störungsfreien Betrieb charakteristischen Verlauf aufweist.

5. Verfahren nach einem der vorhergehenden Ansprüche, **dadurch gekennzeichnet, dass** die Anzahl der störungsfreien Zündungen/Setzungen und/oder die Anzahl der Zündstörungen/Setzstörungen gespeichert werden.

6. Verfahren nach einem der vorhergehenden Ansprüche, **dadurch gekennzeichnet, dass** die Anzahl der störungsfreien Zündungen/Setzungen und/oder die Anzahl der Zündstörungen/Setzstörungen an dem Arbeitsgerät (1) angezeigt werden.

7. Verfahren nach einem der vorhergehenden Ansprüche, **dadurch gekennzeichnet, dass** die Anzahl der störungsfreien Zündungen/Setzungen und/oder die Anzahl der Zündstörungen/Setzstörungen bedarfsabhängig oder zyklisch angezeigt und/oder ausgelesen werden.

8. Verfahren nach einem der vorhergehenden Ansprüche, **dadurch gekennzeichnet, dass** die Anzahl der störungsfreien Zündungen/Setzungen und/oder die Anzahl der Zündstörungen/Setzstörungen per Datenfernübertragung ausgegeben werden.

## Claims

1. Method for operating a hand-held work tool (1), which comprises a data collecting unit (24), in which activations of the trigger switch and accelerations of the work tool (1) are recorded, **characterised in that** within a limited period after an activation of the trigger switch it is monitored whether an acceleration of the work tool (1) exceeds an acceleration threshold and disturbance-free ignition/setting is assumed, if the acceleration of the work tool (1) exceeds the acceleration threshold, and/or an ignition disturbance/setting disturbance is assumed, if the acceleration of the work tool (1) does not exceed the acceleration threshold.

2. Method according to claim 1, **characterised in that** the course of the acceleration is recorded within the limited period.

3. Method according to claim 2, **characterised in that** disturbance-free ignition/setting is assumed, if the acceleration has a characteristic course for disturbance-free operation within the limited period.

4. Method according to claim 2 or 3, **characterised in that** an ignition disturbance/setting disturbance is assumed, if the acceleration does not have a characteristic course for disturbance-free operation within the limited period.

5. Method according to one of the previous claims, **characterised in that** the number of disturbance-free ignitions/settings and/or the number of ignition disturbances/setting disturbances are stored.

6. Method according to one of the previous claims, **characterised in that** the number of disturbance-free ignitions/settings and/or the number of ignition disturbances/setting disturbances are indicated on the work tool (1).

7. Method according to one of the previous claims, **characterised in that** the number of disturbance-free ignitions/settings and/or the number of ignition disturbances/setting disturbances are indicated and/or read cyclically or as required.

8. Method according to one of the previous claims, **characterised in that** the number of disturbance-free ignitions/settings and/or the number of ignition disturbances/setting disturbances are issued by remote data transmission.

## Revendications

1. Procédé pour faire fonctionner un appareil de travail tenu à la main (1) comportant une unité d'acquisition de données (24) dans laquelle des actionnement d'interrupteur de déclenchement et des accélérations de l'appareil de travail (1) sont détectés, **caractérisé par** les étapes consistant à surveiller, pendant une durée limitée après un actionnement d'interrupteur de déclenchement, si une accélération de l'appareil de travail (1) franchit un seuil d'accélération, et déterminer à partir d'un allumage/une pose sans défaut, lorsque l'accélération de l'appareil de travail (1) franchit le seuil d'accélération, et/ou déterminer à partir d'un problème d'allumage/de pose, lorsque l'accélération de l'appareil de travail (1) ne franchit pas le seuil d'accélération.

2. Procédé selon la revendication 1, **caractérisé en ce que** la courbe de l'accélération est détectée pendant la durée limitée.

3. Procédé selon la revendication 2, **caractérisé en ce que** la détermination à partir d'un allumage/d'une pose sans défaut s'effectue lorsque l'accélération pendant la durée limitée a une courbe caractéristique d'un fonctionnement sans défaut.

4. Procédé selon la revendication 2 ou 3, **caractérisé en ce que** la détermination à partir d'un allumage/d'une pose s'effectue lorsque l'accélération pendant la durée limitée n'a aucune courbe caractéristique d'un fonctionnement sans défaut.

5. Procédé selon l'une des revendications précédentes, **caractérisé en ce que** le nombre des allumages/poses sans défaut et/ou le nombre des problèmes d'allumage/de pose sont enregistrés.

6. Procédé selon l'une des revendications précédentes, **caractérisé en ce que** le nombre des allumages/poses sans défaut et/ou le nombre des problèmes d'allumage/de pose sont affichés sur l'appareil de travail (1).

7. Procédé selon l'une des revendications précédentes, **caractérisé en ce que** le nombre des allumages/poses sans défaut et/ou le nombre des problèmes d'allumage/de pose sont affichés et/ou lus en fonction des besoins ou de manière cyclique.

8. Procédé selon l'une des revendications précédentes, **caractérisé en ce que** le nombre des allumages/poses sans défaut et/ou le nombre des problèmes d'allumage/de pose sont générés via une télétransmission de données.
